# FASCICULE DE BREVET EUROPEEN

(11) **EP 2 089 736 B1**
(45) Date de publication et mention de la délivrance du brevet: **09.06.2010**
(21) Numéro de dépôt: 07857562.8
(22) Date de dépôt: 13.12.2007
(51) Int. Cl.: G01S 13/58, G01S 13/66, G01S 13/87, G08B 13/12, G08B 13/24

(54) **SYSTEME GONIOMETRIQUE DE MINI CAPTEURS DOPPLER EN RESEAUX POUR LA SURVEILLANCE DE PERIMETRES**
WINKELMESSSYSTEM MIT NETZWERKEN AUS MINI-DOPPLERSENSOREN ZUR UMFANGÜBERWACHUNG
GONIOMETRIC SYSTEM COMPRISING NETWORKS OF MINI DOPPLER SENSORS FOR PERIMETER SURVEILLANCE

(30) Priorité: 15.12.2006 FR 0610958
(43) Date de publication de la demande: 19.08.2009
(73) Titulaire: THALES, 92200 Neuilly sur Seine (FR); Brunet, Jean-Philippe, 91940 Les Ulis (FR)
(72) Inventeur: DHONDT, François, 91700 Villiers Sur Orge (FR); COGNIEUX, Anne, 91940 Les Ulis (FR)
(74) Mandataire: Lucas, Laurent Jacques
(86) Numéro de dépôt international: PCT/EP2007/063915
(87) Numéro de publication internationale: WO 2008/071780

(56) Documents cités:
- EP-A- 1 441 318
- DE-U1-202004 000 648
- FR-A- 2 346 787
- US-A- 3 733 602

## Description

### DOMAINE DE L'INVENTION

La présente invention concerne le domaine général de la sécurité. Elle concerne plus particulièrement la surveillance d'infrastructures civiles et militaires (aéroport, usine, oléoduc, gazoduc, ports, rails de chemin de fer ...) ainsi que la surveillance de zones privées (propriétés, domaines), voire de zone à accès contrôlé ou même interdit (espaces partiellement ouverts au public, zones militaires, zone d'exclusion sanitaire...). Elle concerne plus particulièrement encore la détection d'intrus (êtres humains, véhicules, ou animaux) et le suivi de leur progression dans la zone protégée.

### CONTEXTE DE L'INVENTION - ART ANTERIEUR

II existe à l'heure actuelle plusieurs types de systèmes permettant de sécuriser une zone, un périmètre, de façon à prévenir des intrusions indésirables dans cette zone. D'un point de vue fonctionnel ces systèmes peuvent être classés dans deux grandes catégories: les systèmes effectuant une simple détection d'une part, et les systèmes de détection simple d'une part et les systèmes anti-intrusion d'autre part. Parmi les systèmes existants, on peut noter ceux de FR 2 346 787 ou de EP 1 441 318.

Parmi les systèmes de détection simple généralement utilisés on peut distinguer plusieurs catégories:
- les barrières détectrices d'intrusions, principalement les barrières infrarouges et les barrières hyperfréquences,
- les systèmes de caméras, caméras optiques ou thermiques par exemple,
- les systèmes détecteurs de mouvements, systèmes de capteurs sismiques ou acoustiques par exemple.

Les barrières détectrices sont des équipements comportant des éléments émetteurs et dont le principe de fonctionnement est de détecter les intrusions en détectant l'altération (barrière hyperfréquence) ou la rupture (barrière infrarouge) du faisceau émis qui en résulte. Ce type de barrière permet avantageusement de réaliser la délimitation d'une zone donnée, rectangulaire ou polygonale par exemple en plaçant au niveau des sommets du polygone des équipements appropriés qui couvrent chacun un côté du polygone. Les barrières immatérielles ainsi constituées permettent de détecter une intrusion et de localiser le côté par lequel l'intrusion dans la zone est réalisée. En revanche ce type de barrière présente de nombreux inconvénients parmi lesquels on peut citer:
- La sensibilité de ce type de barrières aux conditions climatiques, en particulier des barrières infrarouges. On constate notamment par temps de brouillard et de pluie, une baisse d'efficacité due à l'atténuation du signal atténuation.
- le caractère peu mobile de ce type de barrière,
- la nécessité d'implanter une infrastructure plutôt lourde (distribution des signaux et de l'énergie) pour mettre en oeuvre ce type de barrière.
- l'impossibilité avec ce type de barrière de déterminer le type d'intrus, de localiser précisément le lieu de l'intrusion ou encore de suivre la trajectoire de l'intrus après son franchissement de la barrière,
- l'impossibilité encore de mettre en oeuvre une procédure d'alerte préventive avant intrusion, l'intrus éventuel étant détecté seulement au franchissement de la barrière.

Les systèmes de caméras, en particulier les systèmes comportant des caméras télé-orientables, présentent quant à eux l'avantage de permettre à la fois la pré-détection d'un intrus éventuel, la détection du franchissement des limites de la zone protégée et le suivi de l'intrus dans la zone. Cependant, ils présentent deux inconvénients majeurs. D'une part il est nécessaire de balayer de manière régulière la zone protégée et ses abords, puis si un intrus potentiel est détecté de pointer la caméra dans la direction de l'intrus. D'autre part, il faut soit disposer d'un système automatique capable d'identifier un intrus potentiel comme tel soit de mobiliser en permanence un opérateur humain pour scruter les écrans associés aux caméras et effectuer la surveillance.

Les systèmes détecteurs de mouvements sont quant à eux des systèmes aveugles très sensibles qui permettent de détecter grâce aux vibrations acoustiques ou mécaniques engendrées dans la zone protégée, le mouvement aussi bien d'intrus du type engins à moteur que des être humains progressant à pieds ou que des animaux. Cependant ils n'ont généralement pas la capacité de localiser l'intrus dont le mouvement est détecté ni de suivre la trajectoire de l'intrus dans la zone.

Par rapport aux barrières simples, les systèmes anti-intrusion répondent à la volonté d'empêcher ou de retarder l'intrusion. Ces systèmes incluent en particulier tous les types de barrières matérielles, de type grillage ou fils barbelés par exemple, qui peuvent empêcher une intrusion ou du moins ralentir le franchissement par l'intrus des limites de la zone protégée. Sont généralement complétés par des moyens simples de détection d'intrusion à base de détection de fuite de courant ou de détection de vibration du grillage. S'il constitue une entrave généralement efficace à l'intrusion, ces systèmes ne procurent en revanche ni pré-alerte, ni suivi de la progression de l'intrus. Ils nécessitent en outre pour leur mise en place des étapes de génie civil relativement lourdes

### PRESENTATION DE L'INVENTION

Un but de l'invention est de proposer un moyen permettant de contrôler l'accès (en entrée et en sortie) à une zone donnée; ce moyen permettant à la fois de détecter un intrus potentiel avant intrusion, de détecter l'intrusion effective et l'endroit précis de cette intrusion, et enfin d'effectuer, après intrusion, le suivi de l'intrus dans la zone; ce moyen permettant inversement de détecter tout mouvement de sortie hors de la zone.

Un autre but de l'invention est de proposer un moyen facilement déployable sur une zone donnée quelconque et ne nécessitant pas la mise en oeuvre d'une logistique importante.

A cet effet l'invention a pour objet un dispositif de détection des mouvements d'entrée dans une zone géographique ou de sortie de cette zone, ce dispositif comportant:
- une pluralité de capteurs électromagnétiques individuels autonomes, disposés sur le périmètre de la zone surveillée et agencés de façon à ce que la zone de l'espace couverte par chaque détecteur recouvre partiellement la zone de l'espace couverte par les capteurs voisins,
- une unité centrale placée à proximité du périmètre entourant la zone surveillée.
Selon l'invention chaque capteur réalise une mesure de la position angulaire et de la vitesse de tout intrus présente dans la zone qu'il couvre. Ces mesures sont relayées à l'unité centrale depuis le capteur ayant détecté l'intrus, par transmissions successives de ces mesures d'un capteur aux capteurs voisins ou, pour tout capteur suffisamment proche de l'unité centrale, de ce capteur vers l'unité centrale.
L'unité centrale réalise sur les données transmises par les différents capteurs un traitement permettant de déterminer de façon périodique la position et la trajectoire des intrus détectés.

Dans une forme de mise en oeuvre particulière le dispositif peut également comporter des capteurs électromagnétiques individuels autonomes disposés à l'intérieur de la zone surveillée et également agencés de façon à ce que la zone de l'espace couverte par chacun de ces capteurs recouvre partiellement la zone de l'espace couverte par les capteurs voisins.

Selon l'invention, chaque capteur unitaire exploite une bande de fréquence différente de celle exploitée par les capteurs voisins.

Selon l'invention, chaque capteur unitaire autonome effectue la mesure de la vitesse l'intrus détecté par analyse de la fréquence doppler de l'écho correspondant à cet intrus, et la détermination de la position angulaire de l'intrus.

Dans une forme de réalisation préférée, chaque capteur comporte des moyens pour autocalibrer ses mesures.

Dans une forme de réalisation préférée, chaque capteur unitaire comporte des moyens de transmission pour communiquer avec les capteurs voisins par liaison radio, et des moyens pour communiquer avec l'unité centrale.

Dans une forme de réalisation préférée, chaque capteur comporte des moyens pour déterminer sa position relative par rapport aux capteurs voisins et certains capteurs comportent également des moyens de positionnement absolu de type GPS.

Dans une forme de réalisation préférée, chaque capteur comporte des moyens autonomes de fourniture et de stockage d'énergie.

Le dispositif selon l'invention permet avantageusement de détecter, suivre et classifier des individus, animaux et véhicules terrestres qui pénètrent dans la zone protégée ainsi que ceux qui circulent dans cette zone ou en sortent.
Les informations de détection issues des unités de détections unitaires sont transmises à un système central, pouvant incorporer une interface homme machine. Elles peuvent être par ailleurs avantageusement fusionnées avec d'autres types d'informations relatives par exemple à la présence et à la circulation dans la zone protégée d'individus ou de véhicules autorisés.

### DESCRIPTION DES FIGURES

Les caractéristiques et avantages de l'invention seront mieux appréciés grâce à la description qui suit, description qui, pour plus de clarté expose le principe de l'invention au travers d'exemples de mise en oeuvre non limitatifs. Cette description s'appuie en outre sur les figures annexées qui représentent:
- la figure 1, l'illustration d'un premier exemple de mise en oeuvre du dispositif selon l'invention,
- la figure 2, l'illustration d'un exemple de réalisation d'un capteur unitaire,
- la figure 3, une illustration du principe de fonctionnement du dispositif selon l'invention;la figure 4, l'illustration d'un second exemple de mise en oeuvre du dispositif selon l'invention,

### DESCRIPTION DETAILLEE

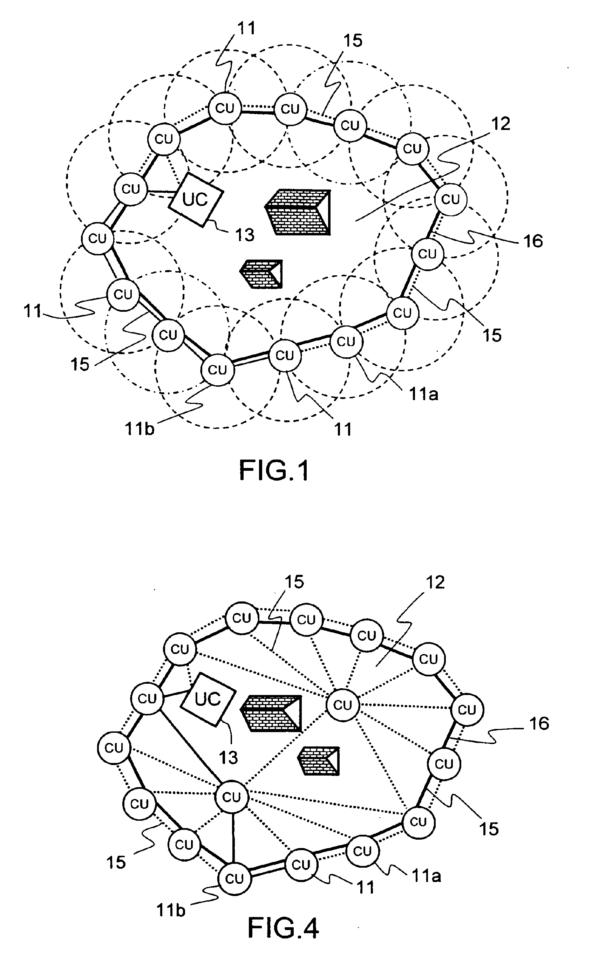

L'illustration de la figure 1 permet de décrire de manière concrète la structure de principe du dispositif selon l'invention. Dans l'exemple de la figure 1 le dispositif selon l'invention est configuré de façon à constituer un système de protection périmétrique. A cet effet il comporte un ensemble de capteurs 11 unitaires, disposés sur le pourtour de la zone 12 à protéger des intrusions.
Par ailleurs une des caractéristiques avantageuses du dispositif selon l'invention consiste dans sa facilité de transport et de déploiement. Pour cela le dispositif selon l'invention présente en particulier une consommation suffisamment faible pour que son alimentation en énergie ne pose pas de problème logistique. A cet effet les capteurs unitaires 11 sont des capteurs électromagnétiques et des systèmes de communication de faible puissance dont la portée est limitée.

Lorsque le dispositif est déployé, les capteurs unitaires sont espacés les uns des autres d'une distance d telle que chaque capteur unitaire, couvrant une zone qui s'étend autour de lui, est situé juste en limite de portée de ses voisins 11a et 11b les plus proches.

Selon l'invention, chaque capteur unitaire 11 est un capteur doppler électromagnétique, de type Radar rudimentaire, effectuant de manière autonome la détection de tout intrus, c'est à dire de tout individu, être humain ou animal, et de tout engin mobile tentant de pénétrer dans la zone qu'il est chargé de surveiller. Il effectue de manière autonome la détection du ou des intrus et détermine la vitesse et la position angulaire de cet intrus. A cet effet il est configuré de façon à pouvoir effectuer des mesures angulaires en gisement et en site. La précision des mesures, qui varie en fonction du mode de détermination utilisé, est fonction des moyens de mesure dont dispose le capteur.
Ainsi, tout intrus tentant de franchir le périmètre de protection pour pénétrer dans la zone protégée, ou encore pour sortir de cette zone, est avantageusement détecté par au moins deux capteurs consécutifs chaque capteur effectuant de manière indépendante la localisation angulaire et la mesure de la vitesse de l'intrus. Cette double ou multiple localisation permet avantageusement de déterminer au moyen d'un traitement géométrique approprié la position de l'intrus à un instant donné.

Le dispositif selon l'invention comporte également une unité centrale 13. celle-ci est chargée de fusionner les informations provenant des différents capteurs 11 et de déterminer la position correspondante de l'intrus. A cet effet chaque capteur 11 qui détecte un intrus retransmet à l'unité centrale13 les informations de localisation angulaire et de vitesse.
De la sorte, connaissant la position et l'orientation de chaque capteur, l'unité centrale peut réaliser, sur une certaine distance fonction de la portée de chaque capteur 11 et de la géométrie de la zone protégée 13, le pistage de l'évolution de la position de l'intrus et déterminer sa trajectoire probable à l'intérieur de la zone.
De même, connaissant la position de chaque capteur 11 le long du périmètre de protection, l'unité centrale 13 est avantageusement à même de déterminer, avec une précision correspondant à la distance entre capteurs, le point d'entrée de l'intrus dans la zone.

Dans un mode de réalisation préféré, tel que celui illustré par la figure 1, les capteurs 11 sont disposés de manière sensiblement équidistante le long du périmètre 16, figuré en trait plein, entourant la zone protégée. Chaque capteur couvre une zone 14 s'étendant tout autour de lui, avec une ouverture angulaire en site lui permettant de détecter aussi bien des intrus terrestres que des engins volant à basse ou très basse altitude, typiquement une ouverture en site d'environ 15° à 20°. Selon ce mode de réalisation préféré, la portée de chaque capteur est de l'ordre d'une centaine à quelques centaines de mètres.

Selon l'invention, chaque capteur 11 qui détecte un intrus transmet directement à l'unité centrale 13, ou à l'unité centrale via le réseau de communication formé par les autres capteurs, les informations de position angulaire et de vitesse relative à cet intrus. La transmission de ces informations est préférentiellement réalisée par communication radio selon, un protocole de communication standard ou sécurisé selon les cas. La communication radio entre les récepteurs unitaires 11 et l'unité centrale 13 permet avantageusement de faciliter le déploiement du dispositif sur le terrain et sa récupération ultérieure.

Selon l'invention la communication des informations relative à un intrus détecté par un capteur donné n'est pas systématiquement réalisée de manière directe entre ce capteur et l'unité centrale. En effet, chaque capteur 11, pour les raisons d'encombrement et de consommation évoquées précédemment, dispose de moyens de communication radio de puissance limitée dont la portée peut être, selon la position du capteur le long du périmètre, inférieur à la distance qui sépare ce capteur de l'unité centrale 13. La communication directe ne peut donc pas être toujours établie. C'est pourquoi le dispositif selon l'invention met avantageusement en oeuvre un mode de communication selon lequel les informations émanant d'un capteur donné sont relayées de proche en proche d'un capteur 11 vers ses voisins 11a et 11b jusqu'à l'unité centrale. On obtient ainsi un réseau de communication maillé 15 qui assure la remontée des informations vers l'unité centrale 13. d'un point de vue opérationnel le protocole de communication utilisé permet après une phase d'initialisation de déterminer pour chaque capteur la voie de communication la plus appropriée pour transmettre les informations à l'unité centrale. Cette voie est par exemple matérialisée par la liste des identifiants des capteurs qui vont relayer successivement l'information depuis un capteur donné vers l'unité centrale. Comme l'illustre l'exemple de la figure, on privilégie ainsi pour chaque capteur 11 une succession de mailles (mailles en traits pleins passant par le capteur 11 a) parmi toutes les mailles possibles.

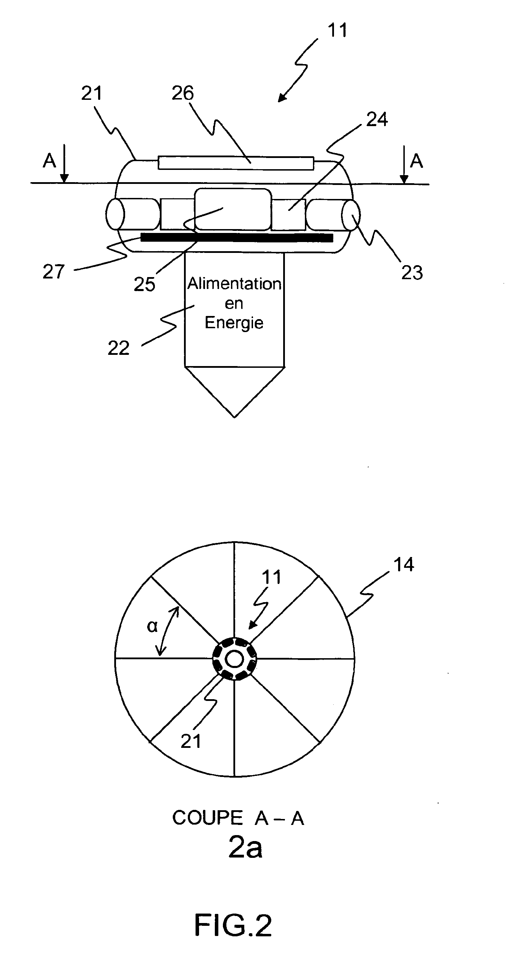

La figure 2 présente de manière schématique la structure d'un capteur unitaire selon l'invention. Comme l'illustre la figure, chaque capteur unitaire comporte principalement une partie supérieure 21 de la forme d'un boîtier circulaire de taille modeste, d'un diamètre d'environ une vingtaine de centimètres et d'une hauteur de quelques centimètres par exemple, et une partie inférieure 22 ayant la forme d'un piquet creux destinée à être enfoncée dans le sol de façon à maintenir le capteur 11 dans une position fixe et stable, la partie supérieure 21 restant en surface.

Selon l'invention, la partie supérieure 21 comporte principalement les éléments suivants:
- Un ensemble d'antennes 23 disposées, comme l'illustre la vue 2-a, sur le pourtour du capteur, chaque antenne ayant un diagramme lui permettant de couvrir un secteur angulaire α. Compte tenu de la valeur de cet angle α, le capteur selon l'invention comporte un nombre d'antennes tel que la totalité de la zone de surveillance 14 affectée au capteur est couverte. L'angle α est par ailleurs déterminé en fonction de la précision souhaitée sur détermination de la position angulaire de l'intrus détecté au travers du signal reçu par une des antennes du capteur.
- Un ensemble d'éléments émetteur/récepteur 24 comportant des moyens pour effectuer la génération d'ondes hyperfréquence et des moyens pour effectuer la réception des échos reçus au niveau de chaque antenne.
   Dans un mode de réalisation alternatif le capteur peut ne comporter qu'un seul élément émetteur/récepteur qui est alors associé à un dispositif (matrice) de commutation, matrice qui commute alternativement l'élément émetteur/récepteur sur chacune des antennes.
- des moyens numériques 25 aptes à réaliser les foncions de traitement du signal et de traitement de données relatives à la détection des intrus, ainsi que les fonctions relatives à la gestion des communications avec les autres capteurs et avec l'unité centrale,
- des moyens pour permettre au capteur de déterminer sa position et son orientation par rapport au nord, cette orientation étant déterminée à l'aide d'une boussole électronique ou tout autre moyen approprié.

Suivant le mode de réalisation choisi, le capteur selon l'invention dispose de moyens plus ou moins autonome pour déterminer sa position géographique.
Chaque capteur composant le dispositif selon l'invention peut ainsi par exemple comporter des moyens de positionnement absolu de type GPS. Alternativement, le dispositif selon l'invention peut ne comporter que quelques capteurs de référence comportant des moyens de positionnement absolu, le reste des capteurs ne comportant que des moyens de positionnement relatif par localisation des capteurs voisins.
- des moyens de transmission radio permettant à chaque capteur d'établir une communication directe avec les capteurs voisins et/ou avec l'unité centrale. Ces moyens de transmission radio ayant une portée relativement faible par rapport aux dimensions de la surface à protéger, seul les capteurs les plus proche de l'unité centrale sont en mesure d'entrer en communication directe avec elle, les autres capteurs étant limités au mode de communication de proche en proche décrit précédemment.
- un circuit imprimé 27 qui sert à l'interconnexion des différents éléments entre eux et à la transmission des signaux électriques basse fréquence, radiofréquence et hyperfréquence, ainsi qu'au support mécanique de ces différents éléments.

Selon l'invention, la partie inférieure 22 comporte quant à elle principalement des moyens d'alimentation en énergie, des batteries par exemple.

Dans un mode de réalisation préféré, le capteur comporte également des moyens 26 permettant de recharger de manière autonome les batteries fournissant l'énergie électrique au capteur. Ces moyens consistent par exemple en un jeu de cellules photovoltaïques implantées sur la face supérieure de la partie supérieure 21 et venant recharger les batteries logées dans la partie inférieure 22. De la sorte le capteur bénéficie avantageusement d'une autonomie d'alimentation complète et est en mesure de fonctionner quasi indéfiniment.

Pour certaines applications particulières le capteur 11 peut également être doté de moyens additionnels tels que des capteurs sismiques utilisés en particulier pour détecter les tentatives d'arrachement du sol et de mise hors service du capteur.

Ainsi, de par la structure compacte et la faible taille des capteurs 11 d'une part, de par leur totale autonomie de fonctionnement d'autre part et de par souplesse du système de communication entre les capteurs et l'unité centrale d'autre part encore, le dispositif selon l'invention se présente avantageusement comme une structure légère, facilement déployable et ne demandant aucune logistique particulière. Quoique utilisable dans toutes les circonstances nécessitant la mise en place d'un périmètre de sécurité, II est donc particulièrement adapté à la sécurisation rapide de zones sensibles ou de zones de danger.

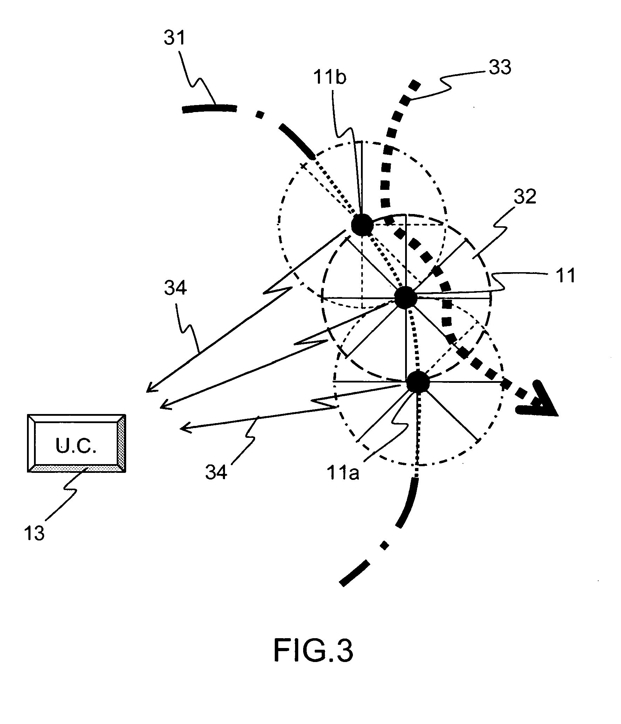

En ce qui concerne le principe de fonctionnement du dispositif selon l'invention, celui-ci peut être décrit en considérant la figure 3.
La mise en oeuvre sur le terrain du dispositif selon l'invention comporte plusieurs phase. On distingue ainsi:
- une phase de déploiement,
- une phase d'initialisation,
- une phase de fonctionnement opérationnel.

La phase de déploiement consiste à disposer sur un périmètre 31 entourant la zone 12 à protéger l'ensemble des capteurs 11 avec un espacement entre deux capteurs défini de façon à ce que chaque capteur 11 soit positionné à l'intérieur des zones couvertes par les deux capteurs voisins 11 a, 11 b. Chaque capteur est placé à l'endroit voulu par un opérateur qui enfonce en terre la partie inférieure 22 du capteur. De la sorte celui-ci est maintenu naturellement en position. Puis il est par exemple mis en marche dans un état d'attente de l'étape d'initialisation.

La phase d'initialisation permet la mise en service opérationnel du dispositif. Durant cette phase, chaque capteur transmet notamment à l'unité centrale les informations relatives à sa position (relative ou absolue selon les cas) et à son orientation par rapport au nord. Au cours de cette phase l'unité centrale détermine également pour chaque capteur 11 trop éloigné pour communiquer avec elle de manière directe l'identifiant du capteur voisin 11a ou 11 b choisi pour relayer ses informations.

La phase de fonctionnement opérationnel représente la phase de surveillance proprement dite. Durant cette phase chaque capteur 11 effectue la surveillance de la zone 14 dont il a la charge, zone divisée en secteurs angulaires 32 d'ouverture α. Par suite lorsqu'une intrusion est détectée en un endroit donné du périmètre 31 chacun des capteurs concernés transmet de manière périodique à l'unité centrale 13, par liaison radio directe ou relayée par le réseau des capteurs unitaires, liaison symbolisée par les flèches brisées 34 sur la figure, une information d'alerte ainsi que les mesures successives relatives à l'intrusion, à savoir le secteur angulaire dans lequel l'intrus a été détecté par la mesure en cours ainsi que sa vitesse de progression. L'unité centrale 13 exploite alors ces données en associant entre elles les données fournies par différents capteurs et jugées relatives à un même intrus et détermine par goniométrie, à partir des rafraîchissements successifs des informations, les positions occupées successivement par l'intrus depuis l'instant d'alerte. L'unité centrale est ainsi à même de déterminer la trajectoire initiale de l'intrus dans la zone protégée.
En outre, dans la mesure où, comme l'illustre la figure 3, chaque capteur surveille une zone située de part et d'autre du périmètre de protection 31, une préalarme d'intrusion peut être constituée par l'unité centrale sitôt qu'un intrus potentiel pénètre dans la zone couverte par le capteur. De la sorte, l'unité centrale 13 peut avantageusement, effectuer le suivi de la trajectoire 33 d'un intrus potentiel se déplaçant à l'extérieur de la zone protégée et anticiper une éventuelle intrusion.

Selon le type de protection envisagé pour la zone considérée l'unité centrale 13 peut être un système entièrement automatique apte à transmettre les informations relatives aux mouvements de l'intrus à un poste de commandement ou encore une unité autonome pourvue d'une interface homme machine permettant à un opérateur de décider sur place de la conduite à tenir face à l'intrusion.

Comme il a été dit dans ce qui précède, le dispositif selon l'invention permet de déployer de manière simple une barrière permettant de détecter le franchissement par des intrus (hommes, animaux ou véhicules) d'un périmètre surveillé, et ce, en entrée et en sortie. Avantageusement, cette barrière permet non seulement de détecter l'intrusion, mais encore de prévenir une éventuelle incursion. Elle permet encore de réaliser sur une certaine distance la détermination de la trajectoire de l'intrus à l'intérieur de la zone protégée. Cependant, lorsque cela s'avère nécessaire, il est avantageusement possible, comme l'illustre la figure 4, de déployer le dispositif selon l'invention non plus de façon à former simplement une barrière, mais de façon à réaliser également la surveillance de la zone protégée, le déploiement qui en résulte ne modifiant par ailleurs en rien les caractéristiques fonctionnelles ni le principe de fonctionnement du dispositif selon l'invention.
Dans ce mode particulier de mise en oeuvre, les capteurs unitaires 11 sont déployés, non seulement sur le pourtour de la zone protégée mais aussi à l'intérieur de cette zone. De la sorte, le maillage ainsi réalisé recouvrant la totalité de la zone protégée il est possible sitôt qu'un (ou plusieurs) intrus a (ont) été détecté(s) par les capteurs périphériques de déterminer à tout instant sa (leurs) position(s) dans la zone, sa (leurs) trajectoire(s) et sa (leurs) vitesse(s) de progression.

Les applications du dispositif selon l'invention sont, bien entendu, multiples. En particulier, la possibilité d'avoir accès la connaissance de la position de l'intrus par une méthode de goniométrie permet d'envisager des systèmes complexes. Il est possible, par exemple, d'utiliser un dispositif selon l'invention dont l'unité centrale comporte une interface homme machine permettant à l'opérateur de définir de manière évolutive à l'intérieur d'une zone protégée des zones d'exclusion particulières temporaires qui ne doivent en aucun cas, à des instants donnés et pour des durées déterminées, faire l'objet d'intrusion. Une telle configuration est particulièrement utile dans le cas d'environnement urbain complexe où des intrus potentiels peuvent évoluer parmi un grand nombre d'individus se déplaçant dans la zone par nécessité et dans lequel la mise en place et le retrait répétitifs de barrières physiques sont difficiles à envisager.

Parmi les applications possibles du dispositif selon l'invention on peut naturellement citer de manière non exhaustive:
- la surveillance des frontières, des tarmacs d'aéroport, des plages
- la surveillance des infrastructures critiques : Usines chimiques et nucléaire, usines de traitement d'eau, aéroports, etc..,
- la surveillance des voies de chemin de fer, des oléoducs, des gazoducs,
- la surveillance des biens privés : Surveillance des jardins
- la gestion de zones d'exclusion lors d'incidents chimiques ou sanitaires,
- la détection d'approche de super tankers dans des zones portuaires,
- la surveillance des plateformes de forage
- la détection d'intrusions ou de tentative d'évasion dans les, maisons d'arrêt
- la surveillance de zones militaires et de bivouacs,
- la surveillance au sol d'aéronefs.

## Revendications

1. Dispositif de détection des mouvements d'entrée dans une zone géographique ou de sortie de cette zone, **caractérisé en ce qu'**il comporte:
- une pluralité de capteurs électromagnétiques individuels autonomes, disposés sur le périmètre de la zone surveillée et agencés de façon à ce que la zone de l'espace couverte par chaque détecteur recouvre partiellement la zone de l'espace couverte par les capteurs voisins,
- une unité centrale placée à proximité du périmètre entourant la zone surveillée,
chaque capteur réalisant une mesure de la position angulaire et de la vitesse de tout intrus présent dans la zone qu'il couvre; ces mesures étant relayées à l'unité centrale depuis le capteur ayant détecté l'intrus, par transmissions successives de ces mesures d'un capteur au capteur voisin ou, pour tout capteur suffisamment proche de l'unité centrale, de ce capteur vers l'unité centrale; l'unité centrale réalisant sur les données transmises par les différents capteurs un traitement permettant de déterminer de façon périodique la position et la trajectoire des intrus détectés.

2. Dispositif selon la revendication 1, comportant en outre des capteurs électromagnétiques individuels autonomes disposés à l'intérieur de la zone surveillée et également agencés de façon à ce que la zone de l'espace couverte par chacun de ces capteurs recouvre partiellement la zone de l'espace couverte par les capteurs voisins,

3. Dispositif selon l'une des revendications 1 ou 2, dans lequel chaque capteur unitaire exploite une bande de fréquence différente de celle exploitée par les capteurs voisins.

4. Dispositif selon l'une quelconque des revendications 1 à 3, dans lequel chaque capteur unitaire autonome effectue la mesure de la vitesse l'intrus détecté par analyse de la fréquence doppler de l'écho correspondant à cet intrus.

5. Dispositif selon l'une quelconque des revendications précédentes, dans lequel chaque capteur comporte des moyens pour autocalibrer ses mesures.

6. Dispositif selon l'une quelconque des revendications précédentes, dans lequel chaque capteur unitaire comporte des moyens de transmission pour communiquer avec les capteurs voisins par liaison radio, et des moyens pour communiquer avec l'unité centrale.

7. Dispositif selon l'une quelconque des revendications précédentes, dans lequel chaque capteur comporte des moyens pour déterminer sa position relative par rapport aux capteurs voisins.

8. Dispositif selon la revendication 7 dans lequel certains capteurs unitaires comportent en outre des moyens de positionnement absolu de type GPS.

9. Dispositif selon l'une quelconque des revendications précédentes, dans lequel chaque capteur comporte des moyens autonomes de fourniture d'énergie.

## Claims

1. A device for detecting movements on entering or leaving a geographical area, **characterised in that** it comprises:
- a plurality of autonomous individual electromagnetic sensors disposed around the perimeter of the monitored area and arranged so that the area of space covered by each detector partially covers the area of space covered by the adjacent sensors,
- a central unit located near the perimeter surrounding the monitored area,
each sensor performing a measurement of the angular position and the speed of all intruders present in the area covered thereby; these measurement values being relayed to the central unit from the sensor which detected the intruder by successive transmissions of these measurement values from one sensor to the adjacent sensor or, for all sensors near enough to the central unit, from this sensor to the central unit; the central unit processing the data transmitted by the different sensors in order to periodically determine the position and the trajectory of detected intruders.

2. The device according to claim 1, further comprising autonomous individual electromagnetic sensors disposed inside the monitored area and also arranged so that the area of space covered by each of these sensors partially covers the area of space covered by the adjacent sensors.

3. The device according to claim 1 or 2, wherein each individual sensor uses a frequency band different to that used by the adjacent sensors.

4. The device according to any one of claims 1 to 3, wherein each autonomous individual sensor measures the speed of the detected intruder by analysing the Doppler frequency of the echo corresponding to this intruder.

5. The device according to any one of the previous claims, wherein each sensor comprises means for auto-calibrating its measurements.

6. The device according to any one of the previous claims, wherein each individual sensor comprises transmission means for communicating with the adjacent sensors by radio link and means for communicating with the central unit.

7. The device according to any one of the previous claims, wherein each sensor comprises means for determining its relative position in relation to the adjacent sensors.

8. The device according to claim 7, wherein some of the individual sensors further comprise absolute GPS type positioning means.

9. The device according to any one of the previous claims, wherein each sensor comprises autonomous power supply means.

## Patentansprüche

1. Vorrichtung zum Detektieren von Eintrittsbewegungen in eine geografische Zone oder von Austrittsbewegungen aus dieser Zone, **dadurch gekennzeichnet, dass** sie Folgendes umfasst:
- mehrere individuelle autonome elektromagnetische Sensoren, die am Umfang der überwachten Zone angeordnet und so ausgelegt sind, dass die Zone des von jedem Detektor abgedeckten Raums die Zone des von den Nachbarsensoren abgedeckten Raums teilweise überlappt,
- eine Zentraleinheit, die sich in der Nähe des die überwachte Zone umgebenden Umfangs befindet,
wobei jeder Sensor die Winkellage und die Geschwindigkeit jedes Eindringlings misst, der sich in der von ihm abgedeckten Zone befindet; wobei diese Messwerte von dem Sensor, der den Eindringling detektiert hat, durch aufeinanderfolgende Übertragungen dieser Messwerte von einem Sensor zum jeweiligen Nachbarsensor bis zur Zentraleinheit weitergeleitet werden, oder bei irgendeinem Sensor, der sich nahe genug an der Zentraleinheit befindet, von diesem Sensor zur Zentraleinheit weitergeleitet werden; wobei die Zentraleinheit die von den verschiedenen Sensoren übertragenen Daten so bearbeitet, dass die Position und der Weg der detektierten Eindringlinge periodisch bestimmt werden können.

2. Vorrichtung nach Anspruch 1, die darüber hinaus individuelle autonome elektromagnetische Sensoren umfasst, die im Innern der überwachten Zone angeordnet und ebenfalls so ausgelegt sind, dass die Zone des von jedem der Sensoren abgedeckten Raums die Zone des von den Nachbarsensoren abgedeckten Raums überlappt.

3. Vorrichtung nach Anspruch 1 oder 2, in der jeder einzelne Sensor ein anderes Frequenzband benutzt als das, das von den Nachbarsensoren benutzt wird.

4. Vorrichtung nach irgendeinem der Ansprüche 1 bis 3, bei der jeder einzelne autonome Sensor die Geschwindigkeit des detektierten Eindringlings durch Analysieren der Doppler-Frequenz des Echos misst, das diesem Eindringling entspricht.

5. Vorrichtung nach irgendeinem der vorherigen Ansprüche, bei der jeder Sensor Mittel zum Autokalibrieren seiner Messungen umfasst.

6. Vorrichtung nach irgendeinem der vorherigen Ansprüche, bei der jeder einzelne Sensor Übertragungsmittel zum Kommunizieren mit den Nachbarsensoren per Funk sowie Mittel zum Kommunizieren mit der Zentraleinheit umfasst.

7. Vorrichtung nach irgendeinem der vorherigen Ansprüche, bei der jeder Sensor Mittel zum Bestimmen seiner relativen Position in Bezug auf die Nachbarsensoren umfasst.

8. Vorrichtung nach Anspruch 7, bei der bestimmte einzelne Sensoren darüber hinaus absolute GPS-Positionierungsmittel umfassen.

9. Vorrichtung nach irgendeinem der vorherigen Ansprüche, bei der jeder Sensor autonome Mittel zum Zuführen von Energie umfasst.
